# EUROPEAN PATENT SPECIFICATION

(11) **EP 4 163 940 B1**
(45) Date of publication and mention of the grant of the patent: **13.05.2026**
(21) Application number: 21201866.7
(22) Date of filing: 11.10.2021
(51) Int. Cl.: H01G 2/04, H01G 2/06, H01G 2/10, H01G 9/06, H01G 9/08

(54) **MOUNTING STRUCTURE FOR A CYLINDRICAL CAPACITOR**
MONTAGESTRUKTUR FÜR EINEN ZYLINDERKONDENSATOR
STRUCTURE DE MONTAGE POUR UN CONDENSATEUR CYLINDRIQUE

(43) Date of publication of application: 12.04.2023
(73) Proprietor: Veoneer Sweden Safety Systems AB, 10302 Stockholm (SE)
(72) Inventor: CACU, Adrian, 700051 Iasi (RO); ZAMFIR, Marius, 700051 Iasi (RO)
(74) Representative: Reichert & Lindner Partnerschaft Patentanwälte

(56) References cited:
- EP-A1- 2 790 477
- CN-A- 110 890 214
- CN-U- 202 513 037
- CN-U- 208 507 463
- KR-A- 20090 108 558

## Description

### FIELD OF THE INVENTION

The invention relates to a mounting structure for a capacitor. The mounting structure has a first pair and a second pair of holding elements, which are integral parts of the mounting structure.

### DESCRIPTION OF THE BACKGROUND ART

EP 3 240 375 A1 relates to an electronic module for an actuator that can be used in a motor vehicle. The printed circuit board of the electronic module carries at least one cylindrical capacitor and is spaced apart by means of a holding element. The holding element has elastic biased holder cams. The elastic holder cams hold the cylindrical capacitor in a force-fit manner.

DE 10 2012 002 525 A1 discloses a housing structure for a capacitor. The housing structure has a housing base that is provided with a fastening bolt for fastening a housing portion in a slot or for inserting a holder or a plate in an elongated recess. A dimension-side complementary web is extended from the housing base by a surface of the fastening bolt to fix the housing portion in a precise position and to secure against rotation. The fastening bolt is provided with a partially circumferential cantilever portion.

CN 207818380 U discloses an electrolytic capacitor mount.

CN 210575548 U discloses a capacitor installation structure comprising a fixed frame which is an insulator. The fixed frame is fixed on a circuit board. The fixing frame is rectangular, and the shape of the fixing frame is matched with the shape of the capacitor. The capacitor is clamped in the fixed frame. Clamping devices for fixing the capacitor are symmetrically arranged on the inner wall of the fixing frame. The clamping devices are insulators, and each clamping device comprises an elastic component.

KR 2009 0108558 A shows a mounting structure with several pairs of holding elements. Close to the location of the electrical contacts of a mounted capacitor, a cover spans the mounting structure.

CN 202 513 037 U discloses a mounting structure with holding elements.

EP 2 790 477 A1 discloses a fixing device for a capacitor. The capacitor is fixed by a bedstop loop and a retaining loop.

CN 110 890 214 A discloses a mounting structure for a capacitor with elastic elements and a cover element. The cover element is close to where the electrical contacts of a mounted capacitor are.

CN 208 507 463 U discloses a mounting clip for a capacitor. The clip can receive a capacitor and be fixed to some assembly where the capacitor is required. The clip has two semicircular portions which can be connected by an elastic element.

As known, an electrical control unit (ECU) is an embedded electronic device. A typical ECU consists of a printed circuit board (PCB), a housing, a cover and, in some cases, a backup power unit. It must be ensured that the ECU is supplied with power even in cases where the main power unit has a malfunction. For this reason, the backup power unit is provided, which often is a relatively heavy capacitor. In the case of plastic housings, the fixation of the backup power unit is realized via a mounting structure, also called "cradle", with a plastic snap-fit solution. The mounting structure is integrated in the plastic housing.

To keep the capacitor in place with prior art devices, the mounting structure (cradle) simply relies on the interference between the holding elements (plastic snaps) and the capacitor, which means that the holding elements will be loaded with an elastic force to provide the necessary retention force.

In theory, the prior art concept works sufficiently well. But, in reality, when considering all the tolerances of the diameter of the capacitor, the interference can transform into a gap which may lose capacitor or cause a rattle noise. In case the diameter of the capacitor is too big, the interference may translate in over-stressed holding elements (snaps) which may cause plastic or permanent deformations, creep, fractures etc. of the holding elements. The biggest tolerance that makes the task of keeping the interference within a reasonable interval is the capacitor tolerance.

### SUMMARY OF THE INVENTION

It is an object of the present invention to provide a mounting structure which can easily and efficiently accommodate even large tolerances of the capacitor diameter and the distance between the holding elements and can hold the capacitor tightly.

The above object is achieved by a mounting structure for a capacitor according to the features of claim 1.

According to an embodiment, the mounting structure for a capacitor has a first pair and a second pair of holding elements, which are integral parts of the mounting structure. The holding elements are arranged such that with a capacitor mounted and electrically connected, the first pair of holding elements is closer to the electrical connection of the capacitor than the second pair of holding elements. A locking element spans and connects the second pair of holding elements and is in a form and force fitting contact with the second pair of holding elements. The force provided by the holding elements is not sufficient anyway, even if using standard (quite strong) Polybutylenterephthalat with 30 % glass fibres (PBT-GF30) or cheaper materials like Polypropylen (PP) or Polyamid (nylon).

The advantage of the present invention is that it eliminates the need to rely just on the force provided by holding elements of the mounting structure (cradle) to hold the capacitor and eliminates the need for dispensing glue on top of the capacitor, heat staking snaps over capacitor etc. (other solutions that are considered at the time being and require costly equipment).

According to an embodiment of the invention, the locking element spans only the second pair of holding elements, whereas the first pair of holding elements is free from a locking element. The embodiment described here, relies on adding a locking element that connects the holding elements of the second pair of holding elements. Preferably, the locking element is made of plastic, as the geometry is simple and suitable for injection-molding.

In an embodiment, the front portion of the capacitor (portion of capacitor between the holding elements of the first pair of holding elements) does not need a locking element, as there is sufficient force provided by the holding elements of the first pair of holding elements and electric pins (IDC pins) for holding the capacitor.

In an embodiment, the locking element has a U-shaped form defined by a base and two brackets. A catch is provided at a free end of each bracket. Each catch may have a flat portion and a slanted portion.

In an embodiment, a recess is provided in each holding element of the at least one second pair of holding elements. Each recess may have a slanted portion and a flat portion. In a further embodiment, the catches of the locking part are able to snap in the corresponding recesses of the holding elements of the second pair of holding elements by simply bending the locking element with the help of the assembly force applied on the ends of the locking element.

In an embodiment, the slanted portion of the catch of the locking element abuts against the slanted portion of the recess of the holding element, and the flat portion of the catch of the locking element abuts against the flat portion of the recess of the holding element.

The advantage of the present invention of the mounting structure (cradle) with the locking element is the cooperation of the catches and the recesses in the form and force fitting manner, so that the big tolerances not only of the capacitor diameter but also of the holding elements opening can be easily and efficiently taken into account and overcome. Additionally, other costly process steps, such as dispensing glue on top of the capacitor, heat staking snaps over the capacitor, etc. can be avoided.

According to another embodiment of the invention, the locking element can be designed with an interference in the middle of the locking element. The interference cooperates with a surface of the capacitor in a form and force fitting manner. For example, with contact of the interference of the locking element and the surface of the capacitor, the capacitor is held as tight as possible and in contact with support surfaces of the mounting structure (cradle).

In an embodiment, the locking element is an injection-molded and bendable part which has an inherent elasticity.

In an embodiment, the elastic locking element enables that the catches snap into the recesses of the holding elements of the second pair of holding elements.

In an embodiment, a housing part and the holding elements of the mounting structure are injection-molded, so that the holding elements are an integral part of the housing part.

According to an embodiment of the invention, an electronic control unit for a vehicle is provided that incorporates a mounting structure as described above.

The inventive mounting structure can be as well part of an electronic control unit (ECU) of a vehicle in order to hold a capacitor in place and to ensure a power supply of the ECU even after a failure of the central power supply. The inventive mounting structure enables a simple, cost effective and durable fixation of the capacitor in the ECU.

### BRIEF DESCRIPTION OF THE DRAWINGS

The numerous advantages of the disclosure may be better understood by those skilled in the art by reference to the accompanying figures in which:
Figure 1 shows a schematic representation of the placement of an electronic control unit (ECU) in a vehicle.
Figure 2 is a perspective view of an embodiment of a prior art capacitor cradle (for example, being an integral part of a plastic housing).
Figure 3 is a perspective, sectional view along line A-A of Fig. 2, wherein a capacitor is placed in the prior art cradle.
Figure 4 is a front, sectional view along line A-A of Fig. 2, wherein a capacitor with a minimum allowed diameter tolerance is placed in the prior art cradle.
Figure 5 is a front, sectional view along line A-A of Fig. 2, wherein a capacitor with a maximum allowed diameter tolerance is placed in the prior art cradle.
Figure 6 shows a cradle design for discussing the pull-out force of capacitors having different diameters.
Figure 7 shows mounting structures for discussing the resulting snap force of holding elements of a mounting structure (cradle) in a Y-direction, wherein the capacitors have different diameters.
Figure 8 is a perspective view of an embodiment of the mounting structure (cradle) according to the present invention with the mounted capacitor.
Figure 9 is a perspective view of the locking element of Fig. 8, used for securing the position of the capacitor in the mounting structure.
Figure 10 is a cut-view along line B-B of the mounting structure (cradle) with the mounted capacitor as shown in Fig. 8.
Figure 11 is an enlarged perspective view of the structure of the holding element of the second pair of holding elements as shown in Fig. 8.

### DETAILED DESCRIPTION

In the ensuing description, numerous specific details are provided to enable maximum understanding of the embodiments that are provided by way of example.

The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment. Hence, phrases such as "in an embodiment" or "in one embodiment" that may recur in various points of the present description do not necessarily refer to one and the same embodiment. Furthermore, the particular structures, peculiarities, or characteristics may be combined in any convenient way in one or more embodiments without departing from the scope of the appended claims.

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

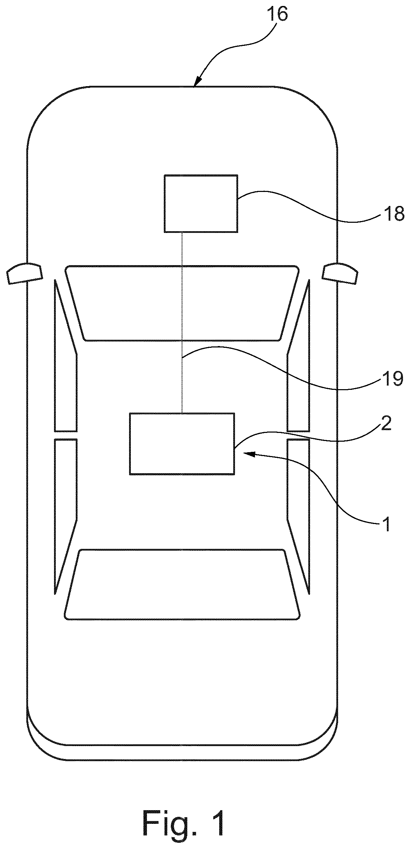

**Figure 1** shows a schematic representation of an embodiment of a placement of an electronic control unit (ECU) 1 for a vehicle **16.** Electronic control unit **1** controls one or more electrical systems of vehicle **16** and is enclosed by a housing **2.** Housing **2** may be made of plastics or metallic materials. In cases where vibrations are more extreme during use of vehicle **16,** housing **2** may be made of metallic materials, such as die-cast aluminium. To supply electrical power to the ECU **1,** ECU **1** is electrically connected to a vehicle battery **18** (main battery), typically by an electric line **19.**

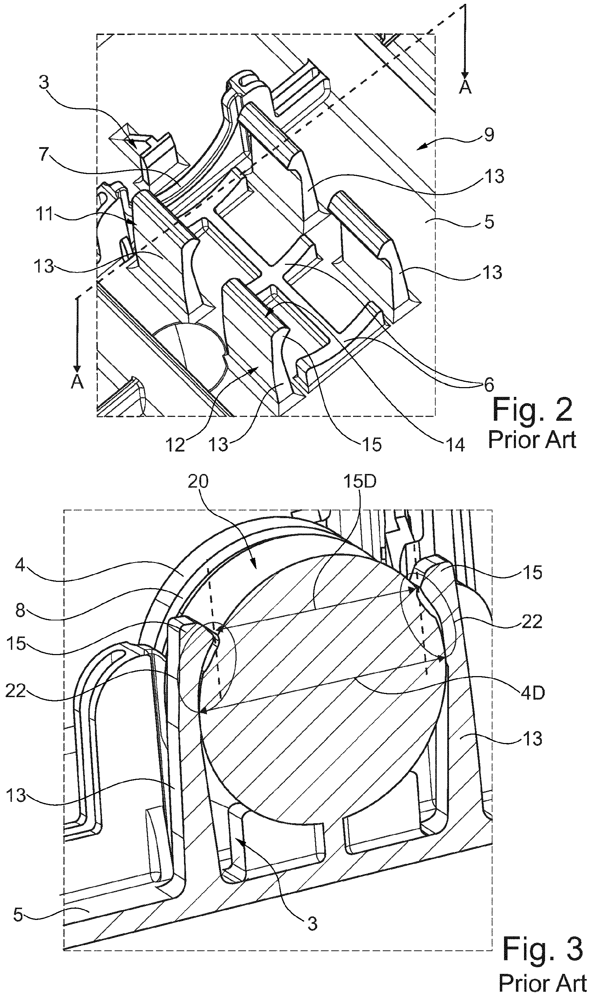

**Figure 2** shows a perspective view of an embodiment of a prior art mounting structure **3** (cradle) for a capacitor **4** (see Fig. 3). In the embodiment shown here, the mounting structure **3** is an integral part of a housing part **9.** The mounting structure **3** has several support surfaces **6,** which are provided on a bottom **5** of housing part **9.** An alignment support **7** is as well an integral part of the mounting structure **3.** Once the capacitor **4** is positioned in the mounting structure **3,** the alignment support **7** is in a form fitting contact with a circumferential notch **8** (see Fig. 3) of capacitor **4.** Circumferential notch **8** enables a correct positioning of capacitor **4** in the mounting structure **3.**

At least a first pair **11** and a second pair **12** of holding elements **13** extend upright from the bottom **5** of mounting structure **3** or the bottom of housing part **9.** A nose **15** is provided at a free end **14** of each holding element **13.** The noses **15** of the first pair **11** of holding elements **13** and the noses **15** of the second pair **12** of holding elements **13** face each other. The holding elements **13** are elastic and keep the capacitor **4** in place. The kind of mounting structure **3,** shown here, simply relies on the interference between the holding elements **13** (e.g., plastic snaps) and the capacitor **4,** which means that the holding mounting structure elements **13,** loaded with an elastic force by the insertion of capacitor **4** into cradle **3,** provide a necessary retention force for capacitor **4.**

**Figure 3** is a perspective, sectional view along line A-A of Fig. 2, wherein capacitor **4** is placed in prior art mounting structure **3.** Here, only the noses **15** of the two opposing holding elements **13** of the first pair **11** of holding elements **13** are shown. The noses **15** of the two opposing holding elements **13** are spaced apart at a distance **15D,** even with the inserted capacitor **4,** which has a diameter smaller than diameter **4D** of capacitor **4.** During the insertion of capacitor **4** into mounting structure **3,** the two opposing holding elements **13** are pushed apart, and once capacitor **4** is in its final position, as shown here, the opposing holding elements **13** exert a retention force on a surface **20** of capacitor **4.** Accordingly, a portion of each holding element **13** abuts against the surface **20** of capacitor **4,** in particular, against surface **20** in the marked areas **22** in Fig. 3.

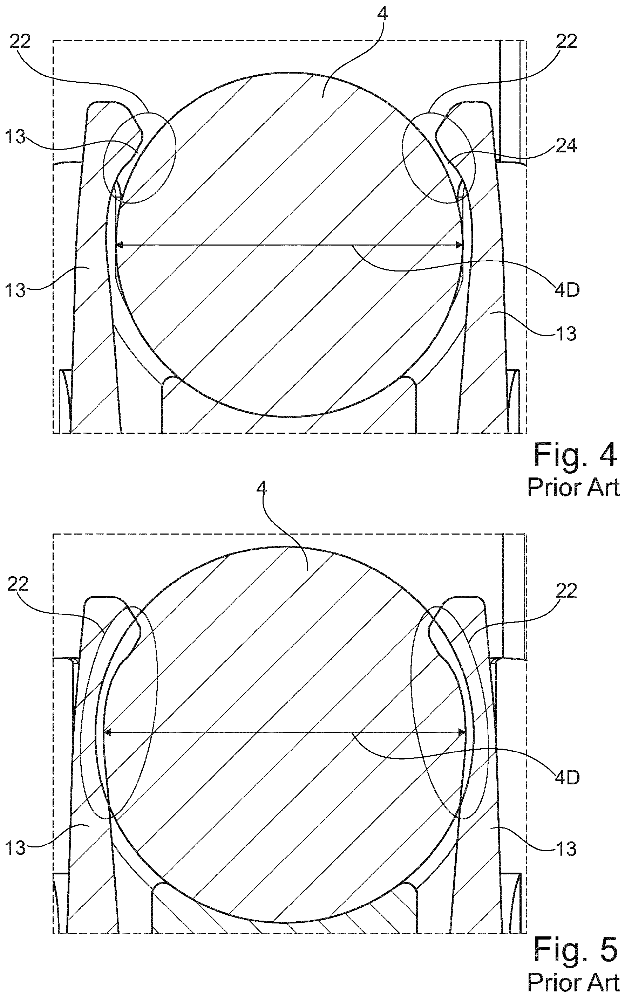

In theory, the above concept works great. But in reality, when considering the tolerances of diameter **4D** of capacitor 4, the abutment of each holding element **13** can transform into a gap **24** as shown in **Figure 4** (see marked areas **22** in Fig. 4). Here, the diameter **4D** of capacitor **4** is at a minimum, and consequently the capacitor **4** can become loose, cause a rattling noise, or the like.

**Figure 5** shows the situation in which the diameter **4D** of capacitor **4** is at a maximum. Consequently, the interference or the abutment of the opposing holding elements **13** translate in over-stressed holding elements **13,** plastic (permanent) deformations, creep, fractures, or the like, of holding elements **13.** The areas with over-stress between capacitor **4** and holding elements **13** are the marked areas **22** in Fig. 5. In contrary to Fig. 4, no gap **24** is formed.

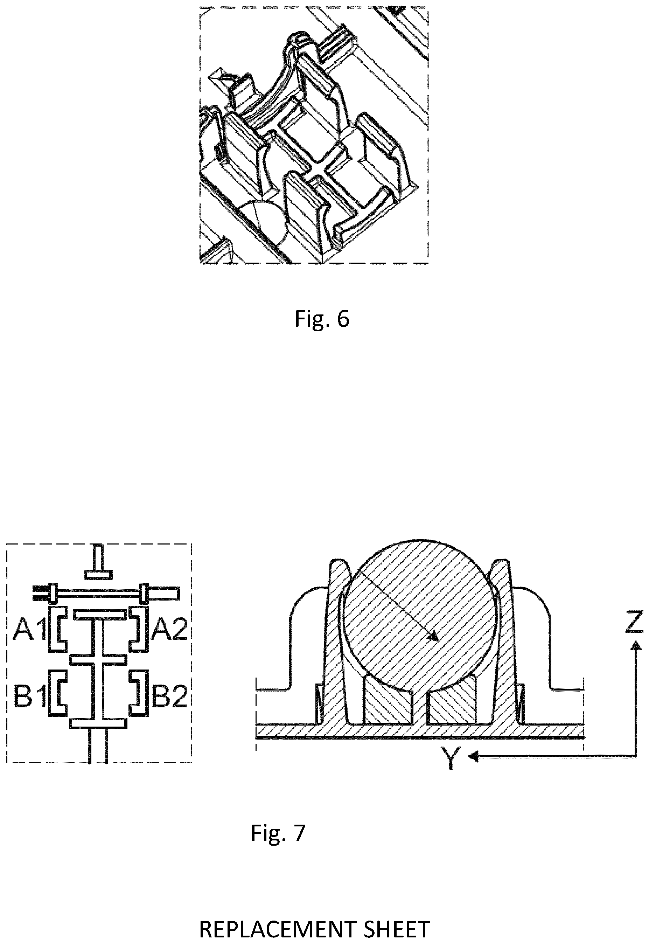

**Figure 6** shows a cradle design. For the pull-out force of a capacitor **4** from the prior art mounting structure **3** design (cradle design) as shown, the following applies: The considered mounting structure **3** has the minimum distance **15D** of 14.8 mm between the noses **15** of the first pair **11** and second pair **12** of opposing holding elements **13.** For the determination of the pull-out force for capacitor **4,** the two worst cases of the diameter 4D of capacitor **4** were considered (minimum diameter = 17.5 mm and maximum diameter = 18.5mm). The pull-out force for the diameter 17.5 mm is 55.8 N, for the capacitor diameter 18.5 mm it is 104 N. The capacitor **4** pull-out force is almost half for the capacitor **4** minimum diameter **4D** compared with the capacitor 4 with the maximum diameter **4D.**

**Figure 7** shows mounting structures for discussion of the resulting snap force of holding elements **13** (snaps) of a mounting structure (cradle) **3** in a Y-direction, wherein the capacitors **4** have different diameters **4D.** The normal force (snap force) between the opposing holding elements **13** (snaps) and the capacitor **4** is considerable for the capacitor **4** with maximum diameter **4D,** equal to 18.5 mm. The normal force between the opposing holding elements **13** A1 and A2 results in 14.9N and between the opposing holding elements **13** B1 and B2 results in 17N. For the capacitor **4** with the minimum diameter **4D,** equal to 17.5 mm, the normal force between the opposing holding elements **13** A1 and A2 results in 1.64N and between the opposing holding elements **13** B1 and B2 results in 1.63N. The low forces which exist if a capacitor **4** with the minimum diameter **4D** is mounted in the mounting structure **3** (cradle) will cause the capacitor **4** to rattle at low frequency and thus causing the module to resonate.

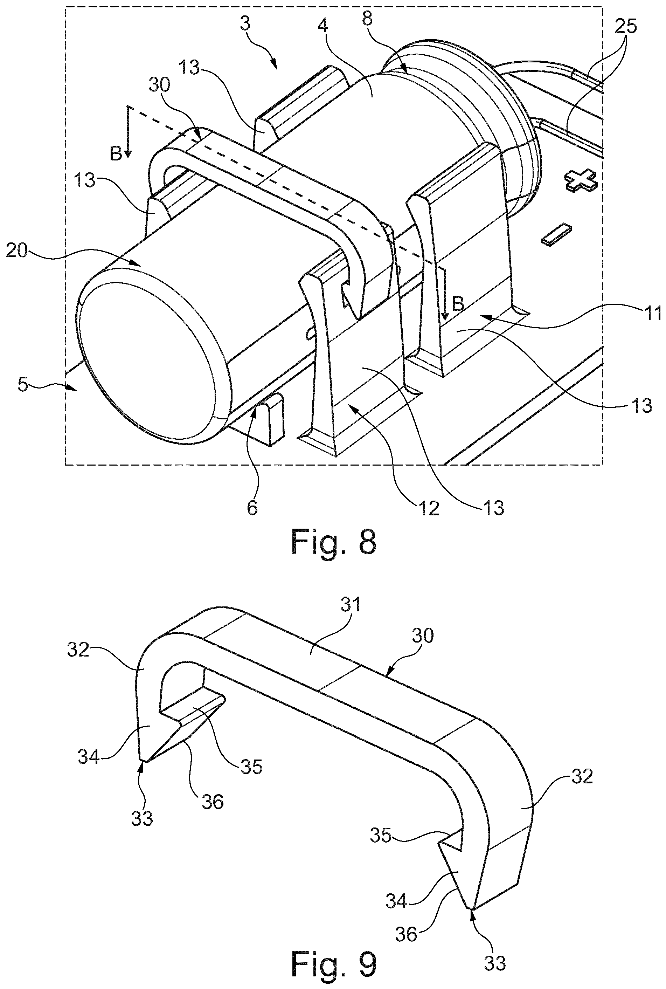

**Figure 8** is a perspective view of an embodiment of the mounting structure **3** (cradle) according to the present invention with a mounded capacitor. The embodiment of the mounting structure **3** shown here has as well a first pair **11** and a second pair **12** of holding elements **13,** which are integral parts of mounting structure **3.** In case the housing part **9** is made of an injection-moldable material, the injection-molded mounting structure **3** may be an integral part of housing part **9.** Nevertheless, injection-molded mounting structure 3 may be formed as a separate element and attached later to housing part 9 during the mounting process.

In the embodiment shown here, a locking element **30** spans the holding elements **13** of the second pair **12** of holding elements **13.** Locking element **30** also connects the two holding elements **13** of the second pair **12** of holding elements **13.** Preferably, locking element **30** is made of plastic by an injection molding process, as the geometry is simple and suitable for molding. Locking element **30** is in a form and force fitting contact with the second pair **12** of holding elements **13.**

It should not be regarded as a limitation of the invention that only the second pair **12** of holding elements **13** is provided with a locking element **30.** It is possible that the first pair **11** and the second pair **12** of holding elements are provided each with a locking element **30.** Nevertheless, the locking element **30** for the holding elements **13** of the first pair **11** (in front of capacitor **4)** are not absolutely necessary, since sufficient force is applied by the holding elements **13** of the first pair **11** and the electric pins **25** to hold capacitor **4.**

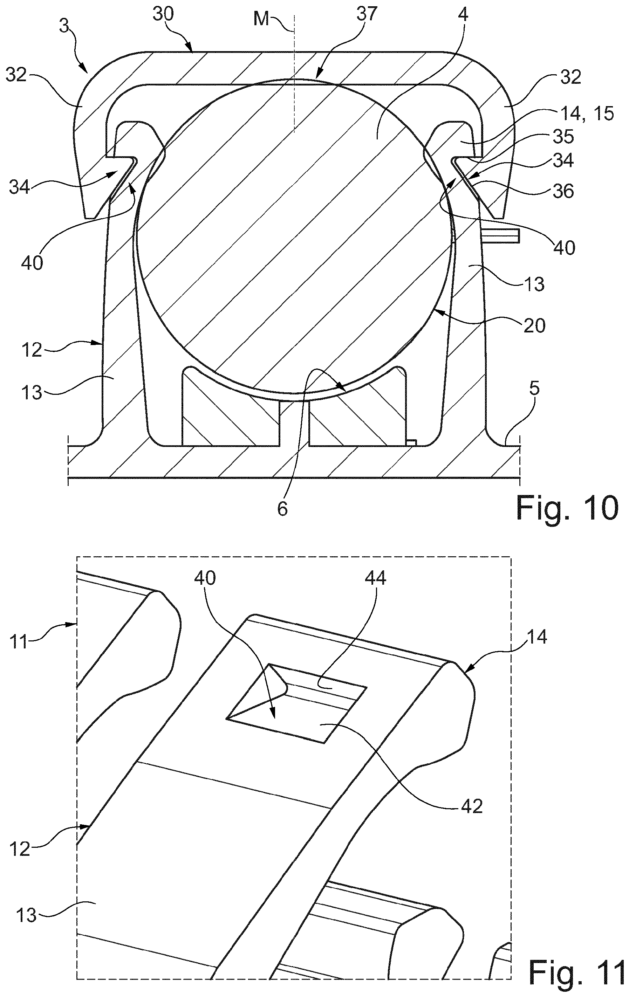

A perspective view of the embodiment of locking element **30** of Fig. 8 is shown in **Figure 9****.** The locking element **30** has a U-shaped form with a base **31** and two brackets **32.** Each bracket **32** has a catch **34** which is provided at the corresponding free end **33** of each bracket **32.** Each catch **34** is formed to engage a recess **40** (see Fig. 11) formed close to the free end **14** of each holding element **13** of the second pair **12** of holding elements **13.** Both catches **34** each have a flat portion **35** and a slanted portion **36** which cooperate with a recess **40,** which is part of the holding elements **13** of the second pair **12** and provided close to the free **14** end of the holding elements **13.**

**Figure 10** is a cut-view along line B-B of the mounting structure **3** (cradle) as shown in Fig. 8. The holding elements **12** are injection-molded and an integral part of bottom **5** of mounting structure **3.** Capacitor **4** is kept in place by mounting structure **3** (cradle) which relies on the interference between the first pair **11** and the second pair **12** of holding elements **13** (e.g., plastic snaps) and capacitor **4.** In the mounted stage as shown in Fig. 10, holding elements **13** are loaded with an elastic force to provide the necessary retention force. In the mounted stage, capacitor **4** rests on a support surface **6** on bottom **5** of mounting structure **3,** and the holding elements **13,** as already mentioned in the description of Fig. 3, form an opening (distance **15D** between the noses **15** of the two opposing holding elements **13** the first pair **11** and the second pair **12)** which is smaller than the diameter **4D** of capacitor **4.**

The embodiment, shown in Fig. 10, relies on an added locking element **30** that connects the second pair **12** of holding elements **13** . The first pair **11** of holding elements **13** does not need an additional locking element **30** as there is sufficient force provided by the first pair **11** of holding elements **13** and the electric pins **25** (see Fig. 8). The locking element **30** may be designed with an interference **37** in its middle area, so that capacitor **4** will be held as tight as possible to mounting structure **3** (cradle). Locking element **30** can be elastically deformed (e.g., simply by bending), so that the catches **34** of the locking element **30** are able to snap into a corresponding recess **40 of** each holding element **13** of the second pair **12,** wherein the recess **40** is close to the free end **14** of the holding elements **30** of the second pair **12.**

**Figure 11** is a perspective and enlarged view of a holding element **30** of the second pair **12** of mounting structure **3** (cradle) as shown in Fig. 8, showing a detailed view of recess **40,** which is designed to receive the corresponding catch **34** of the locking element **30** in a form and force fitting manner. Recess **40** is the negative form of the corresponding catch **34** of holding element 30. In the mounted state of the locking element **30,** each catch **34** and each recess **40** of the holding element **30** of the second pair **12** cooperate in a form and force fitting manner. A slanted portion **42** of recess **40** abuts against a slanted portion **36** of the corresponding locking element **30,** and a flat portion **44** of recess **40** abuts against a flat portion **35** of the locking element **30.**

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: Electronic control unit (ECU)
- 2: Housing
- 3: Mounting structure, cradle
- 4: Capacitor
- 5: Bottom
- 6: Support surface
- 7: Alignment support
- 8: Circumferential notch
- 9: Housing part
- 11: First pair
- 12: Second pair
- 13: Holding element
- 14: Free end
- 15: Nose
- 15D: Distance
- 16: Vehicle
- 18: Vehicle battery
- 19: Electric line
- 20: Surface
- 22: Area
- 25: Electric pin
- 30: Locking element
- 31: Base
- 32: Bracket
- 33: Free end
- 34: Catch
- 35: Flat portion
- 36: Slanted portion
- 37: Interference
- 40: Recess
- 42: Slanted portion
- 44: Flat portion
- M: Middle
- Y: Y-direction
- Z: Z-direction

## Claims

1. A mounting structure (3) for a capacitor (4), comprising
a first pair (11) and a second pair (12) of holding elements (13), which are integral parts of the mounting structure (3) and arranged such that with a capacitor (4) mounted and electrically connected, the first pair (11) of holding elements (13) is closer to the electrical connection (25) of the capacitor (4) than the second pair (12) of holding elements (13),
**characterized by**
a locking element (30) spanning and connecting the second pair (12) of holding elements (13) and being in a form and force fitting contact with the second pair (12) of holding elements (13).

2. The mounting structure (3) according to one of the preceding claims, wherein the locking element (30) has a U-shaped form defined by a base (31) and two brackets (32), and wherein a catch (34) is provided at a free end (33) of each bracket (32).

3. The mounting structure (3) according to claim 2, wherein each catch (30) has a flat portion (35) and a slanted portion (36).

4. The mounting structure (3) according to claim 1, wherein a recess (40) is provided in each holding element (13) of the at least one second pair (12) of holding elements (13).

5. The mounting structure (3) according to claim 4, wherein each recess (40) has a slanted portion (42) and a flat portion (44).

6. The mounting structure (3) according to claim 3 and claim 5 combined, wherein the slanted portion (36) of the catch (34) of the locking element (30) abuts against the slanted portion (42) of the recess (40) of the holding element (13), and the flat portion (35) of the catch (34) of the locking element (30) abuts against the flat portion (44) of the recess (40) of the holding element (13).

7. The mounting structure (3) according to one of the preceding claims, wherein the locking element (30) has an interference (37) in the middle (M) of the locking element (30), which interference (37) cooperates with a surface (20) of the capacitor (4) in a form and force fitting manner.

8. The mounting structure (3) according to one of the preceding claims, wherein the locking element (30) is an injection-molded and bendable part which has an inherent elasticity.

9. The mounting structure (3) according to claim 8, wherein the elastic locking element (30) enables that the catches (34) snap into the recesses (40) of the holding elements (13) of the second pair (12) of holding elements (13).

10. The mounting structure (3) according to one of the preceding claims, wherein a housing part (9) and the holding elements (13) of the mounting structure (3) are injection-molded, so that the holding elements (13) are an integral part of the housing part (9).

11. An electronic control unit (1) for a vehicle (16) incorporating a mounting structure (3) as claimed in any one of the preceding claims.

## Patentansprüche

1. Montagestruktur (3) für einen Kondensator (4), umfassend
ein erstes Paar (11) und ein zweites Paar (12) von Halteelementen (13), die integrale Bestandteile der Montagestruktur (3) sind und so angeordnet sind, dass bei montiertem und elektrisch angeschlossenem Kondensator (4) das erste Paar (11) von Halteelementen (13) näher am elektrischen Anschluss (25) des Kondensators (4) liegt als das zweite Paar (12) von Halteelementen (13),
**gekennzeichnet durch**
ein Verriegelungselement (30), das das zweite Paar (12) von Halteelementen (13) überspannt und verbindet und in einem form- und kraftschlüssigen Kontakt mit dem zweiten Paar (12) von Halteelementen (13) steht.

2. Montagestruktur (3) nach einem der vorhergehenden Ansprüche, wobei das Verriegelungselement (30) eine U-förmige Form aufweist, die durch eine Basis (31) und zwei Klammern (32) definiert ist, und wobei eine Arretierung (34) an einem freien Ende (33) jeder Klammer (32) vorgesehen ist.

3. Montagestruktur (3) nach Anspruch 2, wobei jede Arretierung (30) einen flachen Abschnitt (35) und einen schrägen Abschnitt (36) aufweist.

4. Montagestruktur (3) nach Anspruch 1, wobei in jedem Halteelement (13) des mindestens einen zweiten Paares (12) von Halteelementen (13) eine Ausnehmung (40) vorgesehen ist.

5. Montagestruktur (3) nach Anspruch 4, wobei jede Ausnehmung (40) einen schrägen Abschnitt (42) und einen flachen Abschnitt (44) aufweist.

6. Montagestruktur (3) nach Anspruch 3 und Anspruch 5 in Kombination, wobei der schräge Abschnitt (36) der Arretierung (34) des Verriegelungselements (30) an dem schrägen Abschnitt (42) der Ausnehmung (40) des Halteelements (13) anliegt und der flache Abschnitt (35) der Arretierung (34) des Verriegelungselements (30) an dem flachen Abschnitt (44) der Ausnehmung (40) des Halteelements (13) anliegt.

7. Montagestruktur (3) nach einem der vorhergehenden Ansprüche, wobei das Verriegelungselement (30) in der Mitte (M) des Verriegelungselements (30) ein Übermaß (37) aufweist, das mit einer Oberfläche (20) des Kondensators (4) form- und kraftschlüssig zusammenwirkt.

8. Montagestruktur (3) nach einem der vorhergehenden Ansprüche, wobei das Verriegelungselement (30) ein spritzgegossenes und biegsames Teil ist, das eine Eigenelastizität aufweist.

9. Montagestruktur (3) nach Anspruch 8, wobei das elastische Verriegelungselement (30) ein Einrasten der Arretierungen (34) in die Ausnehmungen (40) der Halteelemente (13) des zweiten Paares (12) von Halteelementen (13) ermöglicht.

10. Montagestruktur (3) nach einem der vorhergehenden Ansprüche, wobei ein Gehäuseteil (9) und die Halteelemente (13) der Montagestruktur (3) spritzgegossen sind, so dass die Halteelemente (13) ein integraler Bestandteil des Gehäuseteils (9) sind.

11. Elektronisches Steuergerät (1) für ein Fahrzeug (16) mit einer Montagestruktur (3) nach einem der vorhergehenden Ansprüche.

## Revendications

1. Structure de montage (3) pour un condensateur (4), comprenant
une première paire (11) et une deuxième paire (12) d'éléments de retenue (13), qui font partie intégrante de la structure de montage (3) et sont disposés de telle sorte que, lorsqu'un condensateur (4) est monté et connecté électriquement, la première paire (11) d'éléments de retenue (13) se trouve plus près de la connexion électrique (25) du condensateur (4) que la deuxième paire (12) d'éléments de retenue (13),
**caractérisé par**
un élément de verrouillage (30) qui enjambe et relie la deuxième paire (12) d'éléments de retenue (13) et qui est en contact par complémentarité de forme et par force avec la deuxième paire (12) d'éléments de retenue (13).

2. Structure de montage (3) selon l'une des revendications précédentes, dans laquelle l'élément de verrouillage (30) présente une forme en U définie par une base (31) et deux agrafes (32), et dans laquelle un arrêt (34) est prévu à une extrémité libre (33) de chaque agrafe (32).

3. Structure de montage (3) selon la revendication 2, dans laquelle chaque arrêt (30) comporte une partie plate (35) et une partie inclinée (36).

4. Structure de montage (3) selon la revendication 1, dans laquelle un évidement (40) est prévu dans chaque élément de retenue (13) de la au moins une deuxième paire (12) d'éléments de retenue (13).

5. Structure de montage (3) selon la revendication 4, dans laquelle chaque évidement (40) comporte une partie inclinée (42) et une partie plate (44).

6. Structure de montage (3) selon les revendications 3 et 5 combinées, dans laquelle la partie inclinée (36) de l'arrêt (34) de l'élément de verrouillage (30) vient en butée contre la partie inclinée (42) de l'évidement (40) de l'élément de retenue (13), et la partie plate (35) de l'arrêt (34) de l'élément de verrouillage (30) vient en butée contre la partie plate (44) de l'évidement (40) de l'élément de retenue (13).

7. Structure de montage (3) selon l'une des revendications précédentes, dans laquelle l'élément de verrouillage (30) comporte un épaulement (37) au milieu (M) de l'élément de verrouillage (30), lequel épaulement (37) coopère avec une surface (20) du condensateur (4) par complémentarité de forme et par force.

8. Structure de montage (3) selon l'une des revendications précédentes, dans laquelle l'élément de verrouillage (30) est une pièce moulée par injection et pliable qui présente une élasticité intrinsèque.

9. Structure de montage (3) selon la revendication 8, dans laquelle l'élément de verrouillage élastique (30) permet aux arrêts (34) de s'enclencher dans les évidements (40) des éléments de retenue (13) de la deuxième paire (12) d'éléments de retenue (13).

10. Structure de montage (3) selon l'une des revendications précédentes, dans laquelle une partie de boîtier (9) et les éléments de retenue (13) de la structure de montage (3) sont moulés par injection, de sorte que les éléments de retenue (13) font partie intégrante de la partie de boîtier (9).

11. Unité de commande électronique (1) pour un véhicule (16) comprenant une structure de montage (3) selon l'une quelconque des revendications précédentes.
